# EUROPEAN PATENT SPECIFICATION

(11) **EP 0 985 760 B1**
(45) Date of publication and mention of the grant of the patent: **16.06.2004**
(21) Application number: 99202425.7
(22) Date of filing: 22.07.1999
(51) Int. Cl.: D07B 1/06

(54) **Steel cord for radial tire**
Stahlseil für einen radialen Reifen
Câble d'acier pour pneumatique radial

(30) Priority: 10.09.1998 KR 9837287
(43) Date of publication of application: 15.03.2000
(73) Proprietor: Hankook Tire Co., Ltd., Kangnam-gu, Seoul 135-080 (KR)
(72) Inventor: Han, Yong Shick, Yusung-gu, Taejon-shi 305-390 (KR)
(74) Representative: Esteban Perez-Serrano, Maria Isabel

(56) References cited:
- US-A- 4 586 324
- US-A- 5 802 830
- 34054: "High tensile strength steel cord constructions for tyres" RESEARCH DISCLOSURE, no. 340, August 1992 (1992-08), pages 624-633, XP000324123 INDUSTRIAL OPPORTUNITIES LTD., HAVANT, GB ISSN: 0374-4353

## Description

### BACKGROUND OF THE INVENTION

### Field of the Invention

The present invention relates to a steel cord for radial tires, and more particularly relates to a steel cord for radial tires having a construction including a "2+5" bi-diametric ccrd formed by twisting a core and a strand in such a fashion that they have the same twist pitch length and the same twist direction, so that the number of processing steps for the twisting process is reduced from two to one, thereby reducing the manufacturing costs while achieving an improvement in productivity.

### Description of the Prior Art

In a steel cord having a two-layer twisted construction, a core, which forms a first layer of the steel cord, and a strand, which forms a second layer of the steel cord, are typically different from each other in terms of twist pitch length and twist direction as follows:

- Steel Cord Construction : 1x3(0.20)+6(0.35)
- Twist Pitch Length of Core : 10 mm
- Twist Pitch Length of Strand : 18 mm
- Twist Direction of Core : S (Right)
- Twist Direction of Strand: Z (Left)

For this reason, it is impossible to carry out the twisting process for the manufacture of such a cord using a single processing step. Conventionally, the twisting process has been carried out using two processing steps. However, this results in an increase in the manufacturing costs for cords. Furthermore, the contact between the core and strand is rendered to be a point contact. Where such a cord is applied to a tire, a stress concentration occurs at portions of the cord, where point contacts are formed, during the use of the tire. Due to such a stress concentration, a fretting phenomenon occurs which results in a degradation in the durability of the tire.

In order to reduce the above mentioned drawback, a method for the manufacture of steel cords having a two-layer twisted construction has been proposed in which a steel cord is formed by twisting a core and a strand in such a fashion that they have different twist pitch lengths while having the same twist direction as follows:

- Steel Cord Construction : 1x2+7(0.30)
- Twist Pitch Length of Core : 8 mm
- Twist Pitch Length of Strand : 16 mm
- Twist Direction of Core : S (Right)
- Twist Direction of Strand : S (Right)

In this case, it is still impossible to carry out the twisting process for the manufacture of such a cord using a single processing step because the core and strand are different in terms of twist pitch length.

Consequently, the twisting process has been carried out using two processing steps in accordance with this method. For this reason, an increase in the manufacturing costs for cords is still involved. Although line contacts are formed between the core and strand by virtue of the same twist direction, they are unstable because the core and strand have different twist pitch lengths. In other words, although this method can reduce the durability degradation of the tire to a some degree, it has a limitation in completely eliminating the fundamental problems.

Meanwhile, in the case of a cord layered with topping rubber, an insufficient penetration of the topping rubber into the core layer may occur. Where such a cord is applied to a tire, such an insufficient penetration of the topping rubber results in a movement of the core layer. As a result, corrosion of the cord caused by moisture or salt is accelerated, thereby greatly degrading the durability of the tire.
It is known from the State of the Art the a steel cord disclosed in the US 5802830 which comprises a core layer having two filaments twisted and a strand of five filaments having the whole steel cord a elliptical sectional shape. This structure of the filaments implies some drawbacks as the difficulty for the rubber to penetrate uniformly, the fretting fatigue occurring between the core and the strand the lack of stable and complete line contact between the core and the strand, it is impossible to eliminate the problems associated with the movements of the core, so it produces a clear reduction of the durability of the tire. Now, the objective of the present invention is to overcome the aforementioned drawbacks, disclosing a steel cord with a circular sectional shape where the diameters of the core and strand filaments are determined to allow a sufficient amount of topping rubber to penetrate into the steel code through gaps defined among filaments of the strand and improving the durability of the tire.

### SUMMARY OF THE INVENTION

Therefore, an object of the invention is to eliminate the above mentioned problems and to provide a steel cord for radial tires having a construction formed by twisting a core and a strand in such a fashion that they have the same twist pitch length and the same twist direction, so that the number of processing steps for the twisting process is reduced from two to one, thereby reducing the manufacturing costs while achieving an improvement in productivity, and so that the core and strand are in stable and almost complete line contact with each other, thereby achieving an improvement in the durability of tires to which the steel cord is applied.

In accordance with the present invention, this object is accomplished by providing a steel cord for radial tires and a radial tire using the steel cord in a belt, a carcass, or a chafer thereof, with the features of the claim.

In accordance with the present invention, the core and strand layers have the same twist direction and the same twist pitch length. Accordingly, the core and strand are not in point contact with each other, but is in line contact with each other. Therefore, the steel cord of the present invention minimizes the occurrence of the fretting phenomenon. In addition, the twisting process for the manufacture of the cord construction according to the present invention can be achieved using a single processing step, as compared to those for conventional constructions involving two processing steps.

### BRIEF DESCRIPTION OF THE DRAWINGS

Other objects and aspects of the invention will become apparent from the following description of embodiments with reference to the accompanying drawing in which:

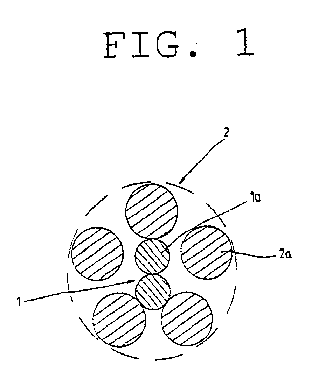

Fig. 1 is a cross-sectional view illustrating a steel cord for radial tires according to the present invention.

### DESCRIPTION OF THE PREFERRED EMBODIMENTS

Referring to Fig. 1, a steel cord having a construction according to the present invention is illustrated.

As shown in Fig. 1, the steel cord includes a core layer 1 consisting of two twisted filaments 1a, and a strand layer 2 disposed around the core layer 1 and consisting of five twisted filaments 2a. In accordance with the present invention, the filaments 1a and 2a are made of carbon steel having a carbon content of 0.70% to 0.96% by weight. In order to obtain an improved adheison force to rubber, the filaments 1a and 2a are plated with brass. The filaments 1a in the core layer 1 and the filament 2a in the strand layer 2 have the same twist pitch length and the same twist direction. Preferably, the twist pitch length ranges from 10 mm to 22 mm. It is also preferred that the filaments 1a and 2a of the core layer 1 and strand layer 2 have a tensile strength of 260 kgf/mm² to 385 kgf/mm² prior to twisting thereof tc form the steel cord.

Preferably, the filaments 1a of the core layer 1 have a diameter dc ranging from 0.15 mm to 0.30 mm whereas the filaments 2a of the strand layer 2 have a diameter ds ranging from 0.20 mm to 0.40 mm. It is also preferred that the ratio between the filament diameters dc and ds, that is, ds/dc, be within a range of 1.35 to 1.90.

Since the core layer and strand layer have the same twist direction and the same twist pitch length in accordance with the present invention, they are in line contact with each other, as compared to conventional constructions involving point contact. Accordingly, the steel cord of the present invention minimizes the occurrence of the fretting phenomenon. In addition, the twisting' process for the manufacture of the cord construction according to the present invention can be achieved using a single processing step, as compared to those for conventional constructions involving two processing steps.

In order to evaluate the steel cord according to the present invention, the physical properties of a cord sample formed using conditions of ds = 0.35 mm, dc = 0.25 mm, and ds/dc = 1.40 were measured. The results obtained after the measurement are described in Table 1.

**Table 1**

| Physical Properties | Measured Value |
|---|---|
| Tensile Force (kgf) | 15 |
| Twist Pitch Length (mn) | 15 |
| Elongation (%) | 2.4 |
| Elasticity (%, Loop Test) | 93 |
| Stiffness (g-cm)* | 120 |
| Antifatigue Property** | More than 1 million cycles |

| | |
|---|---|
| *: measured by a Taber stiffness tester while using conditions of a sample length of 7 cm, an angle of 15°, a proportional constant of 10, and a load of 1.000 g | |
| **: corresponding to the number of cycles in the completely full tension and reserved cycle of stress condition by a rotation beam fatigue tester and the applied stress level is 90 kgf/mm² | |

As apparent from the above description, the present invention provides a steel cord for radial tires having a construction formed by twisting a core and a strand in such a fashion that they have the same twist pitch length and the same twist direction, so that the core and strand are in stable and almost complete line contact with each other. A fretting fatigue occurring between the core and strand due to repeated movements of a tire, to which the steel cord is applied, is minimized by virtue of the stable and complete line contact between the core and strand. This results in an improvement in the durability of the tire. In accordance with the present invention, the diameters of the core and strand are appropriately determined to allow a sufficient amount of topping rubber to penetrate into the steel code through gaps defined among filaments of the strand. Accordingly, it is possible to eliminate the problem associated with a movement of the core. This provides an improvement in the durability of the tire.

Although the preferred embodiments of the invention have been disclosed for illustrative purposes, those skilled in the art will appreciate that various modifications, additions and substitutions are possible, without departing from the scope of the invention as disclosed in the accompanying claims.

## Claims

1. A steel cord for radial tires and a radial tire using the steel cord in a belt, a carcass, or a chafer thereof the steel cord comprising; a core layer (1) having two filaments (1a) twisted and a strand layer (2) having five filaments (2a) twisted to have the same twist pitch length and the same twist direction as the core layer; wherein the steel cord has a circular sectional shape, where twist pitch length in the core and in the strand is of 10 mm to 22 mm; wherein said filaments of said core and strand layers being made of a carbon steel having a carbon content ranging from 0,7% to 0,96% by weight and being plated with brass at respective surfaces thereof to obtain an enhanced adhesion force to rubber and said filaments having a tensile strength of 260 kgf/mm2 to 385 Kgf/mm2 prior to twisting thereof to form said steel cord, wherein said filaments of said core layer have a diameter (dc) ranging from 0,15mm to 0,30 mm, said filaments of said strand layer have a diameter ranging from to 0,20 mm to 0,40 mm and the ratio ds/dc between the filament diameters(ds) and (dc) is within a range of 1,35 to 1,90, and wherein said two filaments of the core layer are in contact with said five filaments of the strand layer.

## Patentansprüche

1. Ein Stahlband für Gürtelreifen und ein Gürtelreifen unter Verwendung eines Stahlbands in einem Gürtel, einem Gehäuse oder einer Wulstumlage hiervon, wobei das Stahlband Folgendes umfasst: eine Kernschicht (1), die über zwei gedrehte Drähte (1a) verfügt und eine Litzenschicht (2), die über fünf gedrehte Drähte (2a) verfügt, um die selbe Drehsteigungslänge und Drehrichtung aufzuweisen wie die Kernschicht, wobei das Stahlband einen runden Querschnitt hat und die Drehsteigungslänge im Kern und in der Litze zwischen 10 mm und 22 mm liegt, wobei besagte Drähte der besagten Kern- und Litzenschicht aus Kohlenstoffstahl bestehen und einen Kohlenstoffanteil zwischen 0,7 und 0,96 Massenteil aufweist und auf den jeweiligen Oberflächen mit Messing überzogen ist, um eine verbesserte Haftungskraft mit dem Gummi zu erzielen und besagte Drähte haben eine Reissfestigkeit von 260 kgf/mm² bis 385 kgf/mm², bevor sie gedreht werden, um das besagte Stahlband zu bilden, wobei die besagten Drähte der besagten Kernschicht einen Durchmesser (dc) zwischen 0,15 mm und 0,30 mm aufweisen und die besagten Drähte der besagten Litzenschicht einen Durchmesser zwischen 0,20 mm und 0,40 mm aufweisen und das Verhältnis zwischen den Drahtdurchmessern (ds) und (dc) ds/dc in einem Bereich zwischen 1,35 und 1,90 ist und wobei die besagten beiden Drähte der Kernschicht in Kontakt mit dem fünf Drähten der Litzenschicht sind.

## Revendications

1. Câble en acier pour pneumatique à carcasse radiale et pneumatique à carcasse radiale utilisant le câble en acier dans une ceinture, une carcasse, ou une bandelette-talon de celui-ci, le câble en acier comprenant: une couche de noyau (1) ayant deux filaments (1a) torsadés et une couche de toron (2) ayant cinq filaments (2a) torsadés pour avoir la même longueur de pas de torsion et la même direction de torsion que la couche de noyau, dans laquelle le câble en acier a une forme en section circulaire, où la longueur du pas de torsion dans le noyau et dans le toron est de 10 mm à 22 mm; dans lequel lesdits filaments desdites couches de noyau et de toron sont réalisés en acier semi-dur avec un contenu en carbone allant de 0,7% a 0,96% en poids, ceux-ci étant revêtus de laiton à leurs surfaces respectives pour obtenir un force d'adhérence au caoutchouc améliorée et lesdits filaments ayant une résistance à la traction de 260 kgf/mm² à 385 Kgf/mm² avant leur retordage pour former ledit câble en acier, dans lequel lesdits filaments de la couche de noyau ont un diamètre (dc) allant de 0,15 mm à 0,30 mm, lesdits filaments de la dite couche de toron ont un diamètre allant de 0,20 mm à 0,40 mm, et le rapport ds/dc entre les diamètres des filaments (ds) et (dc) se trouve dans la gamme allant de 1,35 à 1,90 ; et dans lequel deux filaments de la couche de noyau sont en contact avec lesdits cinq filaments de la couche de toron.
